(19)

Europäisches Patentamt

European Patent Office

Office européen des brevets

(11) **EP 2 857 914 A1**

(12) **EUROPÄISCHE PATENTANMELDUNG**

(43) Veröffentlichungstag:
08.04.2015 Patentblatt 2015/15

(21) Anmeldenummer: 13186863.0

(22) Anmeldetag: **01.10.2013**

(51) Int Cl.:
*G05B 19/418* (2006.01)     *G01B 21/04* (2006.01)
*G01B 11/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft
80333 München (DE)**

(72) Erfinder:
• **Gottschalk, Hanno
44803 Bochum (DE)**
• **Saadi, Mohamed
42103 Wuppertal (DE)**
• **Rollmann, Georg
45472 Mülheim Ruhr (DE)**
• **Schmitz, Sebastian
45473 Mülheim an der Ruhr (DE)**

(54) **Verfahren und Vorrichtung zur Qualitätskontrolle der Geometrie eines Bauteils**

(57)     Es wird ein Verfahren zur Qualitätskontrolle eines Bauteils bezüglich der Geometrie des Bauteils beschrieben, wobei zunächst eine CAD-Geometrie des Bauteils festgelegt wird und eine Anzahl Leistungskriterien definiert werden. Anschließend wird die tatsächliche Kontur bzw. Geometrie des Bauteils festgestellt. Aus der CAD-Geometrie und der tatsächlichen Kontur bzw. Geometrie des Bauteils wird die Abweichung der tatsächlichen Geometrie von der CAD-Geometrie in Richtung der Oberflächennormalen der CAD-Geometrie bestimmt und daraus ein Feld der Normalenabweichungen über die Oberfläche ermittelt, welches an vorgegebenen Punkten auf der Oberfläche der CAD-Geometrie ausgewertet wird.

1/1

EP 2 857 914 A1

**Beschreibung**

Technisches Gebiet

Die vorliegende Erfindung betrifft ein Verfahren und eine Vorrichtung zur Qualitätskontrolle eines Bauteils, beispielsweise eines Maschinenbauteils, bezüglich der Geometrie des Bauteils. Sie beschreibt insbesondere ein Verfahren zur performancebasierten Qualitätskontrolle von Turbinenschaufeln.

Hintergrund der Erfindung

Bei der Herstellung von Gussbauteilen, etwa Gasturbinenschaufeln, ist die Formgebung des Bauteils gewissen unvermeidbaren Schwankungen unterworfen. Dies ist aufgrund der natürlichen Schrumpfung durch den Abkühlvorgang unvermeidlich. Im Rahmen des Qualitätsmanagements werden nun diejenigen Gussteile ausgesondert, deren Abmessungen außerhalb der in der Spezifikation der Abnehmer beschriebenen Toleranzbänder liegen. Die Messung der Abweichungen der äußeren Kontur von der Sollgeometrie werden entweder von CMM - Maschinen (CMM = Coordinate Measuring Machine) an spezifizierten Punkten durchgeführt, oder es werden digitale 3D Bilder der Konturen durch Weißlichtinterferometer, auch sogenannte White-light Scanner, erstellt, die dann mit der CAD-Geometrie (CAD = computer-aided design) verglichen werden. Übliche Toleranzbänder liegen im Bereich von wenigen Zehntel Millimetern für hochpräzise zu fertigende Bauteile, etwa von Flugtriebwerken oder stationären Gasturbinen. Diese Qualitätsanforderungen führen zur signifikanten Ausschussraten von 20% und höher für solche Gussteile, was bei Kosten von bis zu einigen tausend Euro pro Bauteil zu erheblichen Kosten führt.

Aus den Daten aus der CMM-Messung (Koordinatenmessung) oder der Weißlichtinterferometrie-Messung (White-light Scan) werden bisher die Geometrieabweichungen an vorgegebenen Punkten errechnet. Die Koordinaten der Punkte und die zulässigen Abweichungen wurden vom Kunden - etwa einem OEM (Original Equipment Manufacturer bzw. Erstausrüster) in der Gasturbinenfertigung - der Gießerei in der Spezifikation mitgeteilt. Liegt das Gussteil in allen Abmessungen innerhalb des Toleranzbandes, wird es akzeptiert. Liegt es in einer Dimension außerhalb des Toleranzbandes und ist eine Überholung, etwa durch Schleifen, nicht möglich, wird das Gussteil zu Ausschuss.

Es ist die Aufgabe der vorliegenden Erfindung, ein verbessertes Verfahren und eine Vorrichtung zur Qualitätskontrolle eines Bauteils, beispielsweise eines Maschinenbauteils, bezüglich der Geometrie des Bauteils zur Verfügung zu stellen, wodurch die Ausschussrate gesenkt wird.

Beschreibung der Erfindung

Das erfindungsgemäße Verfahren zur Qualitätskontrolle eines Bauteils bezüglich der Geometrie bzw. Kontur des Bauteils umfasst die folgenden Schritte: Zunächst wird eine CAD-Geometrie des Bauteils definiert bzw. festgelegt und es werden eine Anzahl Leistungskriterien, also mindestens ein Leistungskriterium, definiert. Anschließend wird die tatsächliche Kontur des Bauteils festgestellt bzw. bestimmt, beispielsweise gemessen. Dabei kann die vollständige Geometrie des Bauteils oder Teilbereiche der Geometrie des Bauteils erfasst werden. Aus der CAD-Geometrie und der tatsächlichen Kontur des Bauteils wird die Abweichung der tatsächlichen Kontur, insbesondere der tatsächlichen Geometrie, von der CAD-Geometrie in Richtung der Oberflächennormalen der CAD-Geometrie bestimmt. Aus der Abweichung der tatsächlichen Kontur, insbesondere der tatsächlichen Geometrie, von der CAD-Geometrie in Richtung der Oberflächennormalen der CAD-Geometrie wird ein Feld der Normalenabweichungen, also Abweichungen in der Normalenrichtung, über die Oberfläche ermittelt, welches an vorgegebenen Punkten auf der Oberfläche der CAD-Geometrie ausgewertet wird.

Das vorliegende Verfahren zur Qualitätskontrolle verwendet keine Toleranzbänder mehr, sondern definiert multikriterielle Leistungsstandards, die durch das Bauteil zu erfüllen sind. Diese werden Teil der Spezifikation und ersetzen feste Toleranzbänder. Dadurch können die Anforderungen an die tolerierbaren Formabweichungen des Bauteils präziser an die tatsächlichen Leistungsanforderungen im Rahmen der späteren Anwendung des Bauteils angepasst werden. Auf diese Weise kann die Ausschussrate deutlich gesenkt werden.

Basierend auf der Auswertung des Feldes der Normalenabweichungen kann ein Vorhersagewert für die Leistungsfähigkeit des Bauteils ermittelt werden. Die Leistungsfähigkeit kann zum Beispiel durch die Lebensdauer oder die Belastbarkeit des Bauteils unter vorgegebenen Betriebsbedingungen gekennzeichnet sein.

Das Bauteil ist bevorzugt ein Maschinenbauteil. Grundsätzlich kann es sich bei dem Bauteil um ein Gussteil handeln. Das Bauteil kann ein Bauteil einer Turbine, etwa von Flugtriebwerken, Dampfturbinen oder Gasturbinen, insbesondere stationären Gasturbinen, beispielsweise eine Turbinenschaufel sein.

Vorzugsweise wird die tatsächliche Kontur oder Geometrie des Bauteils durch Weißlichtinterferometrie (white-light scan) festgestellt bzw. bestimmt. Hier sind inzwischen Genauigkeiten von unter einem Zehntel Millimeter möglich. Aus der CAD-Geometrie und einem digitalen dreidimensionalen Bild (3D-Bild), zum Beispiel aus dem Weißlichtinterferometer, der tatsächlichen Kontur bzw. Geometrie des Bauteils kann die Abweichung der tatsächlichen Kontur bzw. Geometrie von der CAD-Geometrie in Richtung der Oberflächennormalen der CAD-Geometrie bestimmt werden.

Vorteilhafterweise wird das ermittelte Feld der Normalenabweichungen an vorgegebenen Punkten auf der Oberfläche der CAD-Geometrie ausgewertet, wobei die Punkte Knotenpunkten eines Finite-Elemente-Netzes oder eines CFD-Netzes (Computational Fluid Dynamics) an der Oberfläche entsprechen. Dies sind üblicher Weise einige 10 000 Punkte und entsprechend liegen nun in einer Software, die etwa in die Software des Weißlichtinterferometers (white-light Scanners) integriert werden kann, einige 10 000 Werte über Normalenabweichungen vor.

Für jedes Leistungskriterium können Formgradienten definiert oder festgelegt werden. Im Rahmen der Auswertung können die ermittelten Werte der Normalenabweichungen für jedes Leistungskriterium mit einem Formgradienten multipliziert und aufsummiert werden. Alternativ dazu kann für jedes Leistungskriterium eine Kombination aus Hessematrix bzw. Hesseoperatoren, insbesondere Formhessematrix bzw. Formhesseoperatoren, und Formgradienten definiert oder festgelegt werden. Im Rahmen der Auswertung können die ermittelten Werte der Normalenabweichungen für jedes Leistungskriterium mit der Kombination aus Hessematrix bzw. Hesseoperatoren und Formgradienten multipliziert und aufsummiert werden. Durch Auswertung der tatsächlichen Abweichung auf der durch Hesseoperator bzw. Hessematrix und Formgradient definierten linearen oder quadratischen Approximation der simulierten Vorhersage des Leistungskriteriums kann ein Vorhersagewert für die Leistungsfähigkeit des Bauteils ermittelt werden. Ist die so vorhergesagte, individuelle Leistungsfähigkeit des Bauteils bezüglich jedes Kriteriums akzeptabel, wird das Bauteil vom Kunden akzeptiert. Ist es dies nicht, weist der Kunde das Bauteil zurück.

Prinzipiell können die Formgradienten und Formhesseoperatoren auf der Grundlage der kontinuierlichen oder diskreten adjungierten Rechenmethode berechnet werden, zum Beispiel mit Software, welche auf der kontinuierlichen oder diskreten adjungierten Rechenmethode beruht. Die Formgradienten und Formhesseoperatoren werden bevorzugt im Designprozess des Kunden mit spezialisierter Software berechnet, welche auf der kontinuierlich oder diskreten adjungierten Rechenmethode beruhen. Dadurch beschränkt sich der Simulationsaufwand des Kunden zur Erstellung der Simulation auf jeweils eine numerische Lösung eines durch eine partielle Differentialgleichung für die Basissimulation für ein gegebenes Leistungskriterium, beispielsweise aerodynamisch durch CFD (Computational Fluid Dynamics) und strukturmechanisch durch FEA (Finite-Elemente Analyse), sowie eine Simulation der adjungierten Gleichung für jedes Leistungskriterium zur Bestimmung des Formgradienten und eine weitere für die Formhessematrix. Insgesamt sind nur wenige Simulationen notwendig, was im Designprozess ohne weiteres darstellbar ist.

Vorzugsweise wird mindestens ein aerodynamisches Leistungskriterium und/oder strukturmechanisches Leistungskriterium aufgestellt wird, zum Beispiel in Rahmen einer aerodynamischen und/oder strukturmechanischen Simulation. Dies ist insbesondere vorteilhaft, wenn es sich bei dem Bauteil um eine Turbinenschaufel handelt.

Weiterhin kann es sich bei dem Bauteil um ein Turbinbauteil handeln und das mindestens eine aerodynamische Leistungskriterium kann den Totaldruckverlust über einer Turbinenstufe und/oder die Leistung einer Turbinenstufe und/oder die Entropieproduktion in einer Turbinenstufe kennzeichnen bzw. beschreiben. Simulation von Basislösung und adjungierter Gleichung für den Formgradienten sind im Rahmen von kommerziellen (z.B. CFX) oder open source (z.B. openFoam) oder akademischen (z.B. Trace) Lösern allgemein verfügbar.

Das mindestens eine strukturmechanische Leistungskriterium kann die Ausfallwahrscheinlichkeit des Bauteils nach einer gewissen Anzahl von Belastungszyklen kennzeichnen bzw. beschreiben.

Basierend auf der Auswertung des Feldes der Normalenabweichungen ein Vorhersagewert für die Ausfallwahrscheinlichkeit des Bauteils bezüglich Kurzzeitschwingfestigkeitsschäden (Low-Cycle Fatigue [LCF]-Schäden) und/oder die Ausfallwahrscheinlichkeit des Bauteils verursacht durch Kriechschäden nach einer vorgegebenen Anzahl von Betriebsstunden und/oder die Ausfallwahrscheinlichkeit des Bauteils durch Langzeitschwingfestigkeitsschäden (High-Cycle Fatigue-Schäden) ermittelt werden.

Bevorzugt wird basierend auf der Auswertung des Feldes der Normalenabweichungen ein Vorhersagewert für die Ausfallwahrscheinlichkeit oder Versagenswahrscheinlichkeit P bezüglich Low-Cycle Fatigue (LCF)-Schäden des Bauteils mit einer Geometrie $\Omega$ bis zu einem Zeitpunkt $t_0$ nach der Formel $P(t < t_0) = 1 - e^{-\int_0^{t_0} \int_{\partial\Omega} h(x,t)\,dx\,dt}$ bestimmt,

wobei h (x, t) eine Hazardrate und $\int_{\partial\Omega} dx$ das Oberflächenintegral über die belastete Oberfläche des Maschinenbauteils bezeichnen. Alternative kann die Versagenswahrscheinlichkeit bezüglich Low-Cycle Fatigue (LCF)-Schäden des Bauteils unter Verwendung verwandter Funktionale mit abgewandelter Hazarddichte bestimmt werden. Der Zeitpunkt $t_0$ wird dabei bevorzugt anhand der Anzahl der Belastungszyklen, beispielsweise der Anzahl der Maschinenstarts, definiert.

Die Hazardrate h(x, t) wird vorzugsweise als eine Weibullverteilung nach der Formel $h(x,t) = \frac{m}{t}\left(\frac{t}{t_{ref}(\varepsilon(x),T(x))}\right)^m$ bestimmt,

wobei $t_{ref}$ eine charakteristische Lebensdauer des Maschinenbauteils, $\varepsilon(x)$ ein Dehnungsfeld, T(x) ein Temperaturfeld und m einen Formparameter der Weibullverteilung bezeichnen. Die numerische Berechnung mittels der Finite Elemente Methode wird beispielsweise in [S. Schmitz, G. Rollmann, H. Gottschalk, R. Krause, Risk estimation for LCF crack initiation, preprint (2013), arXiv:1302.2909] erläutert. Die charakteristische Lebensdauer $t_{ref}$ kann mit der deterministischen Lebensdauer identifiziert werden. Der Formparameter m gibt die Form der zugrundeliegenden Weibullverteilung an. Er ist typischerweise größer als 1. Der Formparameter m kann über eine Anpassung an experimentelle Testdaten bestimmt werden.

Weiterhin kann die Ausfallwahrscheinlichkeit bezüglich Low-Cycle Fatigue (LCF)-Schäden durch ein zeitlich veränderliches Lastkollektiv bestimmt werden. Dabei kann die Wahrscheinlichkeit $J(\Omega)$, dass das Bauteil nach q Belastungszyklen noch funktionstüchtig ist, gemäß der Formel

$$J(\Omega) = S(collective) = \exp\left[-\int_{\partial\Omega}\left(\sum_{i=1}^{q}\frac{1}{N_{\det}(\varepsilon_i)}\right)^m dA\right]$$ bestimmt werden. Dabei bezeichnet A die Oberfläche des Bauteils, m einen Formparameter, $\varepsilon_i$ ein Dehnungsfeld und $N_{\det}(\varepsilon)$ die prognostizierte Standzeit.

Die Berechnung des Formgradienten kann bevorzugt mittels einer Finite-Elemente-Methode erfolgen.

Die erfindungsgemäße Vorrichtung zur Qualitätskontrolle eines Bauteils bezüglich der Geometrie des Bauteils umfasst eine Einrichtung zum Speichern einer definierten oder festgelegten CAD-Geometrie des Bauteils und einer Anzahl definierter Leistungskriterien (mindestens eines definierten Leistungskriteriums), eine Einrichtung zum Bestimmen, insbesondere zum Messen, der tatsächlichen Kontur des Bauteils, und eine Steuereinheit zur Durchführung des zuvor beschriebenen Verfahrens. Die erfindungsgemäße Vorrichtung hat dieselben Vorteile wie das zuvor beschriebene erfindungsgemäße Verfahren.

Auf der Speichereinrichtung können zudem durch Simulation ermittelte Formgradienten für die Durchführung des erfindungsgemäßen Verfahrens gespeichert und zur weiteren Auswertung zur Verfügung gestellt werden.

Die Einrichtung zum Bestimmen, insbesondere zum Messen, der tatsächlichen Kontur des Bauteils kann so ausgelegt sein, dass die vollständige Geometrie oder Teilbereiche der Geometrie des Bauteils bestimmt werden können. Bei der Einrichtung zum Bestimmen der tatsächlichen Kontur des Bauteils handelt es sich vorzugsweise um ein Weißlichtinterferometer (white-light Scanner).

Die Steuereinheit ist bevorzugt ausgelegt zum Bestimmen der Abweichung der tatsächlichen Kontur oder Geometrie von der CAD-Geometrie in Richtung der Oberflächennormalen der CAD-Geometrie aus der CAD-Geometrie und der tatsächlichen Kontur oder Geometrie des Bauteils und zum Ermitteln eines Feldes der Normalenabweichungen über der Oberfläche und zum Auswerten des Feldes der Normalenabweichungen an vorgegebenen Punkten auf der Oberfläche der CAD-Geometrie.

Die vorliegende Erfindung bietet ein Verfahrens, bei dem mittels einer Geometriemessung durch CMM oder white-light Scans und durch den Vergleich mit einer CAD-Geometrie im Produktionsprozess die Performance von mechanischen Bauteilen und insbesondere Gussteilen bezüglich verschiedener Leistungskriterien vorhergesagt werden, ohne dass während der Produktion aufwändige und teure Simulationen durchgeführt werden müssen. Dies beruht auf der Übermittlung von vorab bestimmten Formsensitivitäten erster und gegebenenfalls zweiter Ordnung durch den Kunden im Rahmen der Spezifikation des Bauteils.

Die Erfindung hat zudem den Vorteil, die Annahme oder Zurückweisung eines Bauteils direkt auf Leistungskriterien zu stützen, die mittels der Formsensitivitäten approximativ berechnet werden können. Dabei ist insbesondere die Verwendung der adjungierten Methode zur kostengünstigen Berechnung der Formsensitivitäten für den Zweck der multikriteriell leistungsbezogenen Qualitätskontrolle sowie die Verwendung bestimmter Leistungsgrößen im Gasturbinenbau und darüber hinaus vorteilhaft.

Weitere Vorteile aus der hier beschriebenen Erfindung liegen in einer Absenkung der Ausschussrate, da nicht länger eine Unzahl von geometrischen Abmessungen, sondern integrale Leistungsgrößen zur Bewertung der Qualität herangezogen werden. Falsche Zurückweisungen werden so vermieden. Angesichts der hohen Ausschussraten z.B. bei gegossenen Gasturbinenbauteilen besteht hier ein beträchtliches kommerzielles Potential. Ein weiterer Vorteil entsteht aus Sicht des Kunden durch die Zurückweisung von Bauteilen, die zwar der geometrischen Toleranzdefinition genügen, nicht aber den Leistungsanforderungen des Kunden. Dadurch werden falsche Akzeptanzen vermieden.

Beschreibung eines Ausführungsbeispiels

Weitere Merkmale, Eigenschaften und Vorteile der vorliegenden Erfindung werden im Folgenden anhand eines Ausführungsbeispiels unter Bezugnahme auf die beigefügte Figur näher beschrieben. Alle bisher und im Folgenden beschriebenen Merkmale sind dabei sowohl einzeln als auch in einer beliebigen Kombination miteinander vorteilhaft. Das im Folgenden beschriebene Ausführungsbeispiel stellt lediglich ein Beispiel dar, welches den Gegenstand der Erfindung jedoch nicht beschränkt.

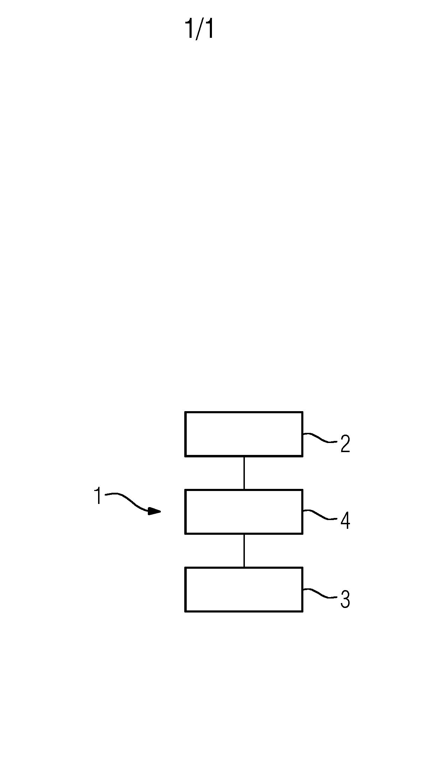

Figur 1    zeigt schematisch eine erfindungsgemäße Vorrichtung.

Die Figur 1 zeigt schematisch eine erfindungsgemäße Vorrichtung 1 zur Qualitätskontrolle. Sie umfasst eine Einrichtung 2 zum Speichern einer definierten CAD-Geometrie des Bauteils und einer Anzahl von definierten Leistungskriterien, eine Einrichtung 3 zum Bestimmen der tatsächlichen Kontur des Bauteils und eine Steuereinheit 4. Die Steuereinheit 4 ist zur Durchführung des im Folgenden beschriebenen Verfahrens ausgelegt. Zu diesem Zweck kann sie unter anderem auf die in der Einrichtung 2 gespeicherten Daten zugreifen und die von der Einrichtung 3 ermittelten Messdaten verarbeiten.

Das erfindungsgemäße Verfahren zur Qualitätskontrolle verwendet keine Toleranzbänder mehr, sondern definiert multikriterielle Leistungsstandards, die durch das Bauteil, beispielsweise Gussteil, zu erfüllen sind. Diese werden Teil der Spezifikation und ersetzen feste Toleranzbänder.

Durch Weißlichtinterferometrie, also z.B. einen White-light Scan, wird sodann die tatsächliche Kontur des Bauteils festgestellt. Hier sind Genauigkeiten von unter einem Zehntel Millimeter inzwischen Stand der Technik. Aus der CAD-Geometrie und dem digitalen 3D-Bild aus dem White-light Scanner wird die Abweichung der tatsächlichen Kontur oder Geometrie von der CAD-Geometrie in Richtung der Oberflächennormalen der CAD-Geometrie bestimmt. Das so gewonnene Feld der Normalenabweichungen über die Oberfläche wird sodann an vorgegebenen Punkten auf der Oberfläche der CAD-Geometrie ausgewertet, die den Knotenpunkten eines Finite-Elemente-Netzes oder eines CFD-Netzes an der Oberfläche entsprechen. Dies sind üblicher Weise einige 10000 Punkte und entsprechend liegen nun in einer Software, die etwa in die Software des White-light Scanners integriert werden kann, einige 10000 Werte über Normalenabweichungen vor.

Für jedes Leistungskriterium werden diese Werte nun mit einem Formgradienten multipliziert und aufsummiert, die von der bestellenden Firma als Teil der Spezifikation mitgeliefert werden. Selbiges ist auch für eine Kombination aus Formhessematrix und Formgradient pro Leistungskriterium möglich. Durch die Auswertung der tatsächlichen Abweichung auf der durch Formhessematrix und Formgradient definierten linearen oder quadratischen Approximation der simulierten Vorhersage des Leistungskriteriums, bekommt man nun einen Vorhersagewert für die Leistungsfähigkeit des ausgemessenen Bauteils. Ist die so vorhergesagte, individuelle Leistungsfähigkeit des Bauteils bezüglich jedes Kriteriums akzeptabel, wird das Bauteil vom Kunden akzeptiert. Ist es dies nicht, weist der Kunde das Bauteil zurück.

Die Formgradienten und Formhesseoperatoren werden im Designprozess des Kunden mit spezialisierter Software berechnet, welche auf der kontinuierlich oder diskreten adjungierten Rechenmethode beruhen. Dadurch beschränkt sich der Simulationsaufwand des Kunden zur Erstellung der Simulation auf jeweils eine numerische Lösung eines durch eine partielle Differentialgleichung für die Basissimulation für ein gegebenes Leistungskriterium (aerodynamisch durch CFD und strukturmechanisch durch FEA), sowie eine Simulation der adjungierten Gleichung für jedes Leistungskriterium zur Bestimmung des Formgradienten und eine weitere für die Formhessematrix. Insgesamt sind nur wenige Simulationen notwendig, was im Designprozess ohne weiteres darstellbar ist. Leistungskriterien werden aufgestellt im Bereich der aerodynamischen Simulation, insbesondere Totaldruckverlust über eine Turbinenstufe, Leistung einer Turbinenstufe und Entropieproduktion in einer Turbinenstufe. Simulation von Basislösung und adjungierter Gleichung für den Formgradienten sind im Rahmen von kommerziellen (z.B. CFX) oder open source (z.B. openFoam) oder akademischen (z.B. Trace) Lösern allgemein verfügbar.

Die Leistungskriterien im Bereich der strukturmechanischen Simulation betreffen die Ausfallwahrscheinlichkeit des Bauteils nach einer gewissen Anzahl von Belastungszyklen. Die daraus berechneten Ausfallwahrscheinlichkeiten - siehe z.B. [H. Gottschalk, S. Schmitz, Optimal reliability in design for fatigue life, preprint (2012), arXiv:1210.4954] und [S. Schmitz, G. Rollmann, H. Gottschalk, R. Krause, Risk estimation for LCF crack initiation, preprint (2013), arXiv:1302.2909] - sind an den materialwissenschaftlich beschriebenen Fehlermechanismus gebunden. Insbesondere werden folgende Zielgrößen abgedeckt: Ausfallwahrscheinlichkeit bezüglich Low-Cycle Fatigue (LCF)-Schäden, Ausfallwahrscheinlichkeit bezüglich LCF durch ein zeitlich veränderliches Lastkollektiv, Ausfallwahrscheinlichkeit verursacht durch Kriechschäden nach einer vorgegebenen Anzahl von Betriebsstunden und Ausfallwahrscheinlichkeit durch High-Cycle Fatigue. Die Berechnung des Formgradienten ist mittels finiten Elementen möglich.

Bei den zu untersuchenden Bauteilen handelt es sich vorzugsweise um Gasturbinenbauteile, beispielsweise Gasturbinenflügel.

Wie bereits erwähnt hat die beschriebene Erfindung unter anderem den Vorteil, dass die Ausschussrate und die Rate der ungerechtfertigt akzeptierten Bauteile gesenkt wird, was zu einer Senkung der Herstellungskosten führt.


**Patentansprüche**

**1.**  Verfahren zur Qualitätskontrolle eines Bauteils bezüglich der Geometrie des Bauteils,
     **dadurch gekennzeichnet, dass**

- eine CAD-Geometrie des Bauteils festgelegt wird,
- eine Anzahl Leistungskriterien definiert werden,
- die tatsächliche Kontur des Bauteils bestimmt wird,
- aus der CAD-Geometrie und der tatsächlichen Kontur des Bauteils die Abweichung der tatsächlichen Kontur von der CAD-Geometrie in Richtung der Oberflächennormalen der CAD-Geometrie bestimmt wird, und
- aus der Abweichung der tatsächlichen Kontur von der CAD-Geometrie in Richtung der Oberflächennormalen der CAD-Geometrie ein Feld der Normalenabweichungen über die Oberfläche ermittelt wird, welches an vorgegebenen Punkten auf der Oberfläche der CAD-Geometrie ausgewertet wird.

2. Verfahren nach Anspruch 1,
**dadurch gekennzeichnet, dass**
basierend auf der Auswertung des Feldes der Normalenabweichungen ein Vorhersagewert für die Leistungsfähigkeit des Bauteils ermittelt wird.

3. Verfahren nach Anspruch 1 oder Anspruch 2,
**dadurch gekennzeichnet, dass**
die tatsächliche Kontur des Bauteils durch Weißlichtinterferometrie (white-light scan) bestimmt wird.

4. Verfahren nach einem der Ansprüche 1 bis 3,
**dadurch gekennzeichnet, dass**
die Abweichung der tatsächlichen Kontur von der CAD-Geometrie in Richtung der Oberflächennormalen der CAD-Geometrie aus der CAD-Geometrie und einem digitalen 3D-Bild der tatsächlichen Kontur des Bauteils bestimmt wird.

5. Verfahren nach einem der Ansprüche 1 bis 4,
**dadurch gekennzeichnet, dass**
das ermittelte Feld der Normalenabweichungen an vorgegebenen Punkten auf der Oberfläche der CAD-Geometrie ausgewertet wird, wobei die Punkte Knotenpunkten eines Finite-Elemente-Netzes oder eines CFD-Netzes (Computational Fluid Dynamics) an der Oberfläche entsprechen.

6. Verfahren nach einem der Ansprüche 1 bis 5,
**dadurch gekennzeichnet, dass**
für jedes Leistungskriterium Formgradienten festgelegt werden und im Rahmen der Auswertung die ermittelten Werte der Normalenabweichungen für jedes Leistungskriterium mit einem Formgradienten multipliziert und aufsummiert werden.

7. Verfahren nach einem der Ansprüche 1 bis 5,
**dadurch gekennzeichnet, dass**
für jedes Leistungskriterium eine Kombination aus Hesseoperatoren und Formgradienten festgelegt wird und im Rahmen der Auswertung die ermittelten Werte der Normalenabweichungen für jedes Leistungskriterium mit der Kombination aus Hesseoperatoren und Formgradienten multipliziert und aufsummiert werden.

8. Verfahren nach Anspruch 7,
**dadurch gekennzeichnet, dass**
durch Auswertung der tatsächlichen Abweichung auf der durch Hesseoperator und Formgradient definierten linearen oder quadratischen Approximation der simulierten Vorhersage des Leistungskriteriums ein Vorhersagewert für die Leistungsfähigkeit des Bauteils ermittelt wird.

9. Verfahren nach Anspruch 7 oder Anspruch 8,
**dadurch gekennzeichnet, dass**
die Formgradienten und Hesseoperatoren auf der Grundlage der kontinuierlichen oder diskreten adjungierten Rechenmethode berechnet werden.

10. Verfahren nach einem der Ansprüche 1 bis 9,
**dadurch gekennzeichnet, dass**
mindestens ein aerodynamisches Leistungskriterium und/oder strukturmechanisches Leistungskriterium aufgestellt wird.

11. Verfahren nach Anspruch 10,

**dadurch gekennzeichnet, dass**

es sich bei dem Bauteil um ein Turbinenbauteil handelt und das mindestens eine aerodynamisches Leistungskriterium den Totaldruckverlust über einer Turbinenstufe und/oder die Leistung einer Turbinenstufe und/oder die Entropieproduktion in einer Turbinenstufe kennzeichnet/beschreibt.

12. Verfahren nach Anspruch 10,
    **dadurch gekennzeichnet, dass**
    das mindestens eine strukturmechanische Leistungskriterium die Ausfallwahrscheinlichkeit des Bauteils nach einer gewissen Anzahl von Belastungszyklen kennzeichnet.

13. Verfahren nach einem der Ansprüche 1 bis 12,
    **dadurch gekennzeichnet, dass**
    basierend auf der Auswertung des Feldes der Normalenabweichungen ein Vorhersagewert für die Ausfallwahrscheinlichkeit des Bauteils bezüglich Low-Cycle Fatigue (LCF)-Schäden und/oder die Ausfallwahrscheinlichkeit des Bauteils verursacht durch Kriechschäden nach einer vorgegebenen Anzahl von Betriebsstunden und/oder die Ausfallwahrscheinlichkeit des Bauteils durch High-Cycle Fatigue-Schäden ermittelt wird.

14. Verfahren nach Anspruch 13,
    **dadurch gekennzeichnet, dass**
    basierend auf der Auswertung des Feldes der Normalenabweichungen ein Vorhersagewert für die Ausfallwarscheinlichkeit/Versagenswahrscheinlichkeit P bezüglich Low-Cycle Fatigue (LCF)-Schäden des Bauteils mit einer Geometrie $\Omega$ bis zu einem Zeitpunkt $t_0$, Versagenswahr-scheinlichkeit P nach der Formel

    $$P(t < t_0) = 1 - e^{-\int\limits_{0}^{t_0}\int\limits_{\partial\Omega} h(x,t)\,dx\,dt}$$ bestimmt wird, wobei h(x, t) eine Hazardrate bezeichnet, oder unter Verwendung verwandter Funktionale mit abgewandelter Hazarddichte bestimmt wird, und/oder die Ausfallwahrscheinlichkeit bezüglich Low-Cycle Fatigue (LCF)-Schäden durch ein zeitlich veränderliches Lastkollektiv bestimmt wird.

15. Verfahren nach einem der Ansprüche 1 bis 14 in Verbindung mit Anspruch 6 oder Anspruch 7,
    **dadurch gekennzeichnet, dass**
    die Berechnung des Formgradienten mittels einer Finite-Elemente-Methode erfolgt.

16. Vorrichtung zur Qualitätskontrolle (1) eines Bauteils bezüglich der Geometrie des Bauteils,
    **dadurch gekennzeichnet, dass**
    die Vorrichtung

    - eine Einrichtung zum Speichern (2) einer definierten/festgelegten CAD-Geometrie des Bauteils und einer Anzahl definierter Leistungskriterien,
    - eine Einrichtung zum Bestimmen (3) der tatsächlichen Kontur des Bauteils, und
    - eine Steuereinheit (4) zur Durchführung des Verfahrens nach einem der Ansprüche 1 bis 15 umfasst.

1/1

Europäisches
Patentamt

European
Patent Office

Office européen
des brevets

**EUROPÄISCHER RECHERCHENBERICHT**

**Nummer der Anmeldung**

EP 13 18 6863

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/215341 A1 (GU JIE [US] ET AL) 23. August 2012 (2012-08-23) * Zusammenfassung * * Absätze [0003] - [0008] * * Absatz [0053] * * Ansprüche 1-7 * ----- | 1-5, 10-16 | INV. G05B19/418 G01B21/04 G01B11/00 |
| X | GB 2 194 367 A (FMC CORP FMC CORP [US]) 2. März 1988 (1988-03-02) * Zusammenfassung * * Seite 1, Zeilen 1-36 * * Seite 12, Zeilen 10-20 * * Anspruch 1 * ----- | 1-5, 10-16 | |

**RECHERCHIERTE SACHGEBIETE (IPC)**

G05B
G01B

Der vorliegende Recherchenbericht wurde für alle Patentansprüche erstellt

| Recherchenort | Abschlußdatum der Recherche | Prüfer |
|---|---|---|
| Den Haag | 11. März 2014 | Dörre, Thorsten |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
    .........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 18 6863

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-03-2014

| Im Recherchenbericht angeführtes Patentdokument | Datum der Veröffentlichung | Mitglied(er) der Patentfamilie | Datum der Veröffentlichung |
|---|---|---|---|
| US 2012215341 A1 | 23-08-2012 | CN 102650864 A<br>DE 102012202599 A1<br>US 2012215341 A1 | 29-08-2012<br>11-10-2012<br>23-08-2012 |
| GB 2194367 A | 02-03-1988 | CA 1284383 C<br>CH 678761 A5<br>DE 3725347 A1<br>FR 2617306 A1<br>GB 2194367 A<br>IT 1228548 B | 21-05-1991<br>31-10-1991<br>18-02-1988<br>30-12-1988<br>02-03-1988<br>20-06-1991 |

EPO FORM P0461

Für nähere Einzelheiten zu diesem Anhang : siehe Amtsblatt des Europäischen Patentamts, Nr.12/82